# EUROPÄISCHE PATENTSCHRIFT

(11) **EP 3 042 423 B1**
(45) Veröffentlichungstag und Bekanntmachung des Hinweises auf die Patenterteilung: **02.11.2022**
(21) Anmeldenummer: 14789981.9
(22) Anmeldetag: 03.09.2014
(51) Int. Cl.: H02G 3/08

(54) **STECKVERBINDERGEHÄUSE**
PLUG CONNECTOR HOUSING
BOÎTIER DE CONNECTEUR ENFICHABLE

(30) Priorität: 04.09.2013 DE 102013109653
(43) Veröffentlichungstag der Anmeldung: 13.07.2016
(73) Patentinhaber: Harting Electric GmbH & Co. KG, 32339 Espelkamp (DE)
(72) Erfinder: BUSSE, Reiner, 33719 Bielefeld (DE); RÜTER, Andreas, 32369 Rahden (DE)
(86) Internationale Anmeldenummer: PCT/DE2014/100316
(87) Internationale Veröffentlichungsnummer: WO 2015/032388

(56) Entgegenhaltungen:
- EP-A1- 0 546 637
- DE-U1- 9 312 476
- DE-U1-202013 101 484
- JP-A- 2012 075 303
- US-A1- 2010 122 826

## Beschreibung

Die vorliegende Erfindung betrifft ein Steckverbindergehäuse zum Schutz eines Steckverbinders sowie ein Verfahren zum Öffnen eines Kabelabgangs eines Steckverbindergehäuses.

Steckverbinder dienen zum Trennen und Verbinden von Leitungen, welche insbesondere zum Leiten von elektrischem Strom oder optischen Strahlungen ausgebildet sind. Solche Steckverbinder weisen üblicherweise ein Steckverbindergehäuse auf, in welches eine Kabelverschraubung eingeführt werden kann. Dabei sind die Steckverbindergehäuse derart ausgebildet, als dass diese einen Schraubkanal aufweisen, in das die Kabelverschraubung eingeschraubt wird. Dieser Schraubkanal wird durch einen sogenannten Kabelabgang gebildet. Dieser Kabelabgang ist üblicherweise zum Innenraum des Gehäuses geöffnet bzw. durch einen Deckel, insbesondere durch einen sogenannten Blinddeckel verschlossen. Bei einem geöffneten Kabelabgang ist nachteilig, dass Verschmutzungen in die Kabelabgänge gelangen können und somit zu einer Störung der Kabelfunktion führen können. Bei zu starker Verschmutzung kann es mithin zu einer Schädigung der Kabel kommen. Bei einer Verschließung mit einem Deckel ist nachteilig, dass dieser vor Einführung der Kabelverschraubung gelöst werden muss. Dies ist üblicherweise sehr aufwendig und kompliziert, da beispielsweise bei kleineren oder schwer zugänglichen Steckverbindergehäusen ein Aufschrauben mit der Hand nicht möglich ist. Somit muss spezielles Werkzeug zum Aufschrauben solcher Deckel verwendet werden.

Weiterhin ist bekannt, dass die Öffnung zwischen dem Inneren des Steckverbindergehäuses und dem Kabelabgang nicht lösbar beispielsweise durch eine Gehäusewand verschlossen ist. Hierbei muss vor der Montage der Kabelverschraubung ein Werkzeug verwendet werden, um eine Öffnung zwischen Kabelabgang und dem Inneren des Steckverbindergehäuses zu erreichen. Dabei wird eine solche Öffnung üblicherweise mittels eines Bohrers aufgebohrt. Auch hierbei ist somit die Verwendung eines Werkzeuges notwendig und führt daher zu einem großen Aufwand, insbesondere auch bei dem Zusammenbau mehrerer Steckverbindergehäuse mit mehreren Kabelverschraubungen zu einem großen Zeitaufwand.

Aus der EP 0 546 637 A1 ist eine Kombination einer elektrischen Anschlussdose mit Dosenrohrstutzen bekannt, die mit einem inneren Schraubengewinde versehen und durch eine Brechwand geschlossen sind und einer in einen Dosenrohrstutzen zu schraubende Überwurfmutter. Die Überwurfmutter verfügt über Brechnocken zum Losbrechen der Brechwand, welche im Prinzip die gleiche Wirkung haben wie die Werkzeuge im Stand der Technik für das Entfernen der Brechwand.

Die DE 93 12 476 U1 offenbart eine Kabeldose mit Deckel, Dichtung und Gewindeöffnungen. Die Gewindeöffnungen sind mit einer Ausbrechscheibe versehen, welche wiederum als Lochscheibe ausgestaltet ist. Die Kabeldose selbst besteht aus einem Hartkunststoff und bereichsweise aus einer nachgiebigen Membran. Um ein Kabel direkt in die Kabeldose einzuführen, wird wie im Stand der Technik die Membran durchstoßen. Bei der Montage eines Gewindestutzes an der Kabeldose bricht die Lochscheibe in diesem Bereich der Verschraubung.

Eine elektrische Anschlussdose, welche für den Outdoor-Einsatz geeignet ist, mit Anschlussbereichen für unterschiedliche Leiterquerschnitte und Gewindeausbrüchen in den Anschlussbereichen ist in der US 2010/122826 A1 offenbart.

Die DE 20 2013 101 484 U1 offenbart einen Kasten für die Elektroinstallation, wobei der Kasten an wenigstens einer seiner Seitenwände wenigstens eine Öffnung beziehungsweise wenigstens eine Ausbrechstelle zum Einbringen einer Öffnung aufweist zur Montage eines Kabelbefestigungselementes. Das Kabelbefestigungselement ist mit einem Gewinde versehen zum Herstellen einer Schraubverbindung zur Befestigung. Der Öffnung ist in der Seitenwand ein Gewinde derart zugeordnet, dass das Gewinde einstückig an der Seitenwand des Kastens angebracht ist.

Das Dokument JP 2012 075303 A offenbart ein Steckverbindergehäuse gemäß dem Oberbegriff des Anspruchs 1.

Der Erfindung liegt somit die Aufgabe zugrunde, wenigstens eines der oben genannten Probleme zu beheben oder zu verringern, insbesondere soll ein Steckverbindergehäuse bereitgestellt werden, bei dem die Montage einer Kabelverschraubung vereinfacht und gleichzeitig Verschmutzungen im Kabelabgang vermieden werden.

Erfindungsgemäß wird ein Steckverbindergehäuse zum Schutz eines Steckverbinders gemäß Anspruch 1 vorgeschlagen.

Unter einem voreingerichteten Kabelabgang wird vorliegend ein Bereich verstanden, in den eine Kabelverschraubung eingeführt, insbesondere verschraubt, werden kann. Unter voreingerichtet ist dabei zu verstehen, dass der Kabelabgang vorbereitet ist, eine Kabelverschraubung aufzunehmen. Der Kabelabgang weist dabei ein Innengewinde und die Kabelverschraubung ein Außengewinde auf. Dabei weist das Steckverbindergehäuse zwei oder mehr voreingerichtete Kabelabgänge, auf. Der eine Kabelabgang ist dabei in Richtung einer vertikalen Achse des Steckverbindergehäuses angeordnet. Zudem ist ein weiterer Kabelabgang um einen vorbestimmten Winkel geneigt zu einer horizontalen Achse des Steckverbindergehäuses angeordnet. Auch bei dieser Ausführungsform wird das Kabel gerade, also ohne zu verknicken, in das Steckverbindergehäuse eingeführt. Vorteilhaft hierbei ist, dass das Steckverbindergehäuse für alle Anwendungsbereiche einsetzbar ist. Das Kabel wird dadurch, dass es trotz des Neigungswinkels gerade in das Steckverbindergehäuse eingeführt wird nicht beschädigt.

Das Gewinde ist vorzugsweise in Form eines Panzergewindes, eines metrischen Gewindes oder eines NPT-Gewindes (National Pipe Threat Gewinde) ausgebildet. Durch das Gewinde wird somit ein Schraubkanal gebildet, der dazu vorbereitet ist ein Gewinde der Kabelverschraubung aufzunehmen. Der Schraubkanal ist demnach dazu vorbereitet, die Kabelverschraubung in bzw. an dem Kabelabgang zu befestigen. Durch die Kabelverschraubung ist ein in diese eingeführtes Kabel fixiert, zentriert, thermisch abgedichtet und optimal zugentlastet. Dadurch werden die zugehörigen elektrischen Betriebsmittel vor mechanischen Einflüssen sowie vor Staub und Feuchtigkeit geschützt. Eine solche Kabelverschraubung ist dabei vorzugsweise aus Metall oder Kunststoff ausgeführt. Sie weist vorzugsweise einen Außendurchmesser von 5mm bis 100mm, insbesondere 5mm bis 40mm, auf.

Die Kabelverschraubung wird in den Schraubkanal eingeführt und in Richtung eines Innenraums, also des Inneren des Steckverbindergehäuses bzw. in Richtung des Verschlusses eingedreht bzw. eingeschraubt. Das Innere des Steckverbindergehäuses dient dabei der Aufnahme des bzw. der durch den wenigstens einen Kabelangang eingeführten Kabels bzw. Kabel. Der Verschluss ist zum Verschließen des wenigstens einen Kabelabgangs zwischen dem Kabelabgang und dem Inneren des Gehäuses angeordnet. Der Verschluss befindet sich somit in dem Bereich des Kabelabgangs, in dem das Gewinde zum Inneren des Steckverbindergehäuses übergeht. Im Übergangsbereich, also im Übergang vom Steckverbindergehäuse zum Verschluss, weist das Steckverbindergehäuse eine Sollbruchstelle auf. Eine solche Sollbruchstelle ist dabei derart ausgestaltet, dass der Verschluss im Überlastfall, also unter Einwirkung einer vorbestimmten Kraft, gezielt und vorhersagbar von dem Steckverbindergehäuse gelöst wird. Eine solche vorbestimmte Kraft wird dabei beim Eindrehen bzw. Einschrauben der Kabelverschraubung auf die Sollbruchstelle ausgeübt. Die Sollbruchstelle versagt dadurch, dass sie eine geringere Wandstärke im Vergleich zu dem Steckverbindergehäuse aufweist. Die geringere Wandstärke wird dabei bspw. durch eine Kerbe oder ein Einritzen gebildet.

Vorteilhaft dabei ist, dass aufgrund des Verschlusses keine Verschmutzung oder ähnliches in den Kabelabgang eindringen kann und kein zusätzliches Werkzeug zum Öffnen des Kabelgangs benötigt wird. Dies kann beispielsweise bei der Montage mehrerer Kabelverschraubungen in ein Steckverbindergehäuse zu einer Zeitersparnis führen. Zudem ist es somit möglich, das erfindungsgemäße Steckverbindergehäuse überall einzusetzen.

Entsprechend der Erfindung ist der Verschluss integraler Bestandteil des Steckverbindergehäuses und/oder an das Steckverbindergehäuse angeformt. Ist der Verschluss integraler Bestandteil des Steckverbindergehäuses, so sind das Steckverbindergehäuse und der Verschluss aus einem Bauteil gefertigt. Der Verschluss und das Steckverbindergehäuse bilden somit eine Einheit. Die Sollbruchstelle wird dabei beispielsweise durch spanende Bearbeitung, insbesondere durch Drehen, Fräsen und/oder Schneiden, hergestellt. Alternativ kann die Sollbruchstelle auch direkt, also als ein gemeinsam mit dem Steckverbindergehäuse ausgebildetes Bauteil, hergestellt werden. So kann beispielsweise bei der Herstellung durch ein Gussverfahren bereits bei der Herstellung Material an der Sollbruchstelle ausgelassen werden, also eine dünnere Wandstärke im Vergleich zum übrigen Steckverbindergehäuse berücksichtigt werden. Das Anformen des Verschlusses an das Steckverbindergehäuse erfolgt beispielsweise durch Erhitzen der beiden Bauteile. Dabei sind der Deckel und das Steckverbindergehäuse vorzugsweise aus demselben Material ausgebildet.

Entsprechend der Erfindung ist der Verschluss durch Einschrauben der Kabelverschraubung in den Schraubkanal des Steckverbindergehäuses herausbrechbar. Durch das Einschrauben wird eine vorbestimmte Kraft von der Kabelverschraubung auf den Verschluss ausgeübt. Dabei trifft die Kabelverschraubung zunächst auf den Verschluss. Wird die Verschraubung weiter in Richtung des Inneren des Steckverbindergehäuses gedreht bzw. eingeschraubt, wirkt eine Kraft auf den Verschluss. Durch die Sollbruchstelle, die beispielsweise als Kerbe, Einritzung oder als eine dünnere Wandstärke im Vergleich zur Wandstärke des Steckverbindergehäuses ausgebildet ist, ist der Übergang zwischen Verschluss und Steckverbindergehäuse an eben dieser Stelle geschwächt. Die Krafteinwirkung der Kabelverschraubung bewirkt somit, dass der Verschluss von dem Steckverbindergehäuse abgetrennt, herausgelöst und/oder herausgebrochen wird. Vorteilhaft hieran ist, dass das Einführen des Kabels in das Steckverbindergehäuse somit werkzeuglos erfolgt und zudem keine vorherige Bearbeitung des Steckverbindergehäuses, insbesondere des Kabelabgangs, notwendig ist.

Entsprechend der Erfindung weist der Verschluss eine Innenseite auf, welche in das Innere des Steckverbindergehäuses weist und eine Außenseite, welche der Innenseite gegenüber liegt. Der Verschluss ragt mit einem Teil seiner Außenseite in den Schraubkanal und/oder der Teil an der Außenseite des Verschlusses bildet einen Flansch, welcher in den Schraubkanal ragt. Ein solcher Verschluss ist dabei beispielsweise kreisförmig ausgebildet. Die Außenseite des Verschlusses bzw. der Flansch ist dabei hohlzylinderartig ausgebildet. Er ist dabei auf dem gesamten Umfang des Verschlusses angeordnet. Durch die hohlzylinderartige Form wird eine Ringfläche gebildet, die in den Schraubkanal ragt. Über diese Ringfläche kann die Kraft, die durch die Kabelverschraubung auf den Verschluss ausgeübt wird, gleichmäßig auf die Sollbruchstelle übertragen werden. Zur gleichmäßigen Kraftübertragung kann der Verschluss alternativ mehrere Flansche, insbesondere zwei bis fünfzig, aufweisen. Dabei sind die Flansche mit einem gleichmäßigen Abstand zueinander angeordnet und belegen vorzugsweise 30% bis 80% des Umfangs des Verschlusses. Vorteilhafterweise kann dabei Material eingespart werden bei gleichzeitig gleichmäßiger Kraftübertragung.

Der Flansch weist eine erste und eine zweite, der ersten gegenüberliegenden Seite auf, wobei der Flansch auf der ersten Seite weiter in den Schraubkanal ragt als auf der zweiten Seite. Unter weiter in den Schraubkanal hineinragen ist vorliegend zu verstehen, dass der Flansch auf der ersten Seite eine andere Höhe aufweist als auf der zweiten Seite. Dabei ist die erste Seite höher als die zweite Seite ausgebildet. Somit ist die Höhe des in den Schraubkanal hineinragenden Flansches nicht gleichmäßig ausgebildet. Der Flansch weist also unterschiedliche Höhen auf. Dabei nimmt die Höhe gleichmäßig von der ersten Seite zur zweiten Seite ab. Vorteilhaft hierbei ist, dass im Vergleich zu einem Flansch mit einer einheitlich, gleichmäßig ausgebildeten Höhe eine geringere Kraft zum Herausbrechen des Verschlusses aufgebracht werden muss. Die Krafteinleitung erfolgt zunächst beim Auftreffen der Kabelverschraubung an der höchsten Stelle des Flansches, also an der ersten Seite. Dadurch wird die Kraft zunächst nur an der Stelle des Verschlusses übertragen, die in axialer Verlängerung zwischen der ersten Seite des Flansches und dem Inneren des Steckverbindergehäuses angeordnet ist. Beim weiteren Hineinschrauben bricht der Verschluss nach und nach heraus bis er letztendlich vollständig von dem Gehäuse getrennt ist. Alternativ kann die zweite Seite weiter als die erste Seite in den Schraubkanal ragen.

In einer bevorzugten Ausführungsform ist die Sollbruchstelle im Wesentlichen kreisförmig ausgebildet und liegt in etwa in axialer Verlängerung des Gewindes des wenigstens einen Kabelabgangs. Eine solche Sollbruchstelle ist dabei derart an das Gewinde angepasst, als dass die Kraft beim Einschrauben der Kabelverschraubung gleichmäßig auf die Sollbruchstelle übertragen wird. Die Sollbruchstelle ist dabei vorzugsweise als eine Vertiefung im Steckverbindergehäuse, insbesondere als eine Kerbe, ausgebildet. Wobei unter Vertiefung jedwede Art der im Vergleich zum übrigen Steckverbindergehäuse geringeren Wandstärke zu verstehen ist. Die Vertiefung bzw. Kerbe verläuft dabei insbesondere gleichmäßig um den bzw. die Flansche des Verschlusses herum.

Der Kabelabgang ist durch den Verschluss staub- und wasserdicht verschlossen. Insbesondere durch die integrale Bauweise bzw. durch das Anformen des Verschlusses, können keine Verschmutzungen wie Staub oder Wasser in den Kabelabgang eindringen. Dadurch werden eine Störung der durch die eingeführten Kabel zu leitenden Signale, ein vorzeitiger Verschleiß der Kabel und/oder eine Zerstörung vermieden.

Der Verschluss durch das Hineindrehen der Kabelverschraubung ohne zusätzliches Werkzeug herausbrechbar. Der Verschluss wird aus dem Steckverbindergehäuse allein durch das Hineindrehen der Kabelverschraubung, also durch die durch die Kabelverschraubung erzeugte Kraft, insbesondere Druckkraft, gelöst. Das Herauslösen bzw. Herausbrechen erfolgt somit werkzeuglos.

In einer bevorzugten Ausführungsform weist das Steckverbindergehäuse an der Sollbruchstelle eine Dicke auf, die in etwa 3% bis 25% der Wandstärke des Steckverbindergehäuses entspricht. Dadurch ist zum Lösen bzw. Herausbrechen des Verschlusses aus dem Steckverbindergehäuse allein die durch die Kabelverschraubung auf den Verschluss wirkende Kraft beim Eindrehen der Kabelverschraubung ausreichend.

In einer weiteren bevorzugten Ausführungsform ist nach dem Herausbrechen des Verschlusses die Sollbruchstelle durch die Kabelverschraubung abgedeckt. Die Sollbruchstelle ist somit derart angeordnet, als dass sie in etwa dem Umfang der Kabelverschraubung entspricht. Durch das Aufliegen der Kabelverschraubung auf dem Steckverbindergehäuse bzw. einem Teil davon ist auch nach dem Herausbrechen des Verschlusses der Kabelabgang wasser- und staubdicht verschlossen.

Vorzugsweise weist der Flansch einen radial ausgebildeten Rand auf und/oder durchdringt mit seinem äußeren Rand ca. 20% bis 50%, vorzugsweise 30% bis 40%, des Schraubkanals. Durch diese Ausbildung des Flansches ist eine optimale Kraftübertragung von der Kabelverschraubung auf die Sollbruchstelle gegeben.

Weiterhin wird erfindungsgemäß wie in Anspruch 7 definiert ein Verfahren zum Öffnen eines Kabelabgangs eines er-findungsgemäßen Steckverbindergehäuses vorgeschlagen.

Die Kabelverschraubung übt dabei über den Flansch des Verschlusses eine vorbestimmte Kraft auf die Sollbruchstelle aus, so dass diese gezielt versagt. Dadurch wird der Verschluss von dem Steckverbindergehäuses gelöst und somit von dem Steckverbindergehäuse getrennt. Die in der Kabelverschraubung angeordneten Kabel können somit in das Innere des Steckverbindergehäuses gelangen.

In einer bevorzugten Ausführungsform ist das Verfahren dadurch gekennzeichnet, dass der Kabelabgang ohne zusätzliches Werkzeug zu öffnen ist. Das erfindungsgemäße Verfahren zeichnet sich dadurch in besonders vorteilhafter Weise aus, dass allein das Aufbringen einer Kraft durch das Einschrauben der Kabelverschraubung in den Kabelabgang ausreicht, um den Verschluss von dem Steckverbindergehäuse zu lösen.

In einer weiteren bevorzugten Ausführungsform ist das Verfahren dadurch gekennzeichnet, dass nach der Herstellung der wenigstens ein Kabelabgang durch den Verschluss staub- und wasserdicht verschlossen ist. Dies wird beispielsweise dadurch erzielt, dass der Verschluss im Wesentlichen durch die Kabelverschraubung abgedeckt ist. Dadurch wird ein Eindringen von Staub und/oder Wasser durch die Kabelverschraubung am Eindringen in das Steckverbindergehäuse gehindert. Die Kabelverschraubung kann dabei zusätzliche Dichtungsmittel wie beispielsweise O-Ringe aufweisen, die das Eindringen äußerer Einflüsse vermeiden.
- Fig.1: zeigt ein nicht beanspruchtes Ausführungsbeispiel eines Steckverbindergehäuses in einer perspektivischen Ansicht,
- Fig. 2: zeigt das Steckverbindergehäuse der Fig. 1 in einer Seitenansicht,
- Fig. 3: zeigt das Steckverbindergehäuse der Fig. 1 in einer weiteren Seitenansicht,
- Fig. 4: zeigt das Steckverbindergehäuse der Fig. 1 in einer Schnittansicht,
- Fig. 5: zeigt einen Ausschnitt des Steckverbindergehäuses aus Fig. 1,
- Fig. 6: zeigt ein nicht beanspruchtes Ausführungsbeispiel eines Steckverbindergehäuses zusammen mit einer Kabelverschraubung in einer ersten Position,
- Fig. 7: zeigt das Steckverbindergehäuse aus Fig. 6 mit der Kabelverschraubung in einer zweiten Position,
- Fig. 8: zeigt das beanspruchte Ausführungsbeispiel eines Steckverbindergehäuses in einer Seitenansicht,
- Fig. 9: zeigt das Steckverbindergehäuse der Fig. 8 in einer weiteren Seitenansicht,
- Fig. 10: zeigt einen Ausschnitt des Steckverbindergehäuses der Fig. 8 in einer Schnittansicht,
- Fig. 11: zeigt einen weiteren Ausschnitt des Steckverbindergehäuses der Fig. 8 in einer Schnittansicht,
- Fig. 12: zeigt ein weiteres Ausführungsbeispiel eines Steckverbindergehäuses in einem Ausschnitt einer Schnittansicht.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

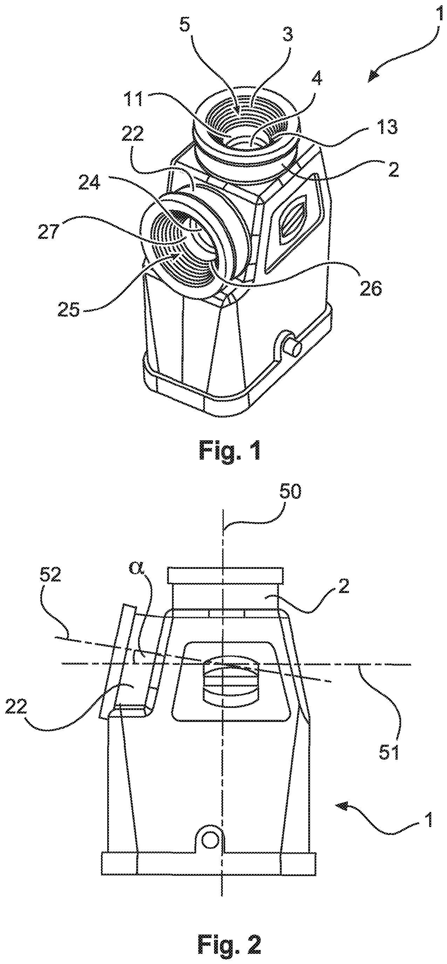

Fig. 1 zeigt ein Steckverbindergehäuse 1 in einer perspektivischen Darstellung. Das Steckverbindergehäuse 1 weist einen ersten Kabelabgang 2 und einen zweiten Kabelabgang 22 auf. Der erste Kabelabgang 2 ist auf der Oberseite des Steckverbindergehäuses angeordnet und zeigt senkrecht nach oben und der zweite Kabelabgang 22 ist seitlich an dem Steckverbindergehäuse 1 angeordnet. Der erste Kabelabgang 2 weist ein Innengewinde 3 als Ausführungsbeispiel eines Gewindes des Kabelabgangs 2 auf, welches einen ersten Schraubkanal 5 bildet. Der erste Schraubkanal 5 ist somit so ausgestaltet, dass er eine Kabelverschraubung aufnehmen kann. Am unteren Ende des Schraubkanals 5, also zwischen dem ersten Schraubkanal 5 und dem Steckverbindergehäuse 1, ist ein erster Verschluss 4 angeordnet. Der erste Verschluss 4 weist einen hohlzylinderförmigen ersten Flansch 11 mit einer ersten Ringfläche 13 auf. Die erste Ringfläche 13 ist dabei so ausgebildet, dass über sie die von einer einzusetzenden Kabelverschraubung ausgeübte Kraft gleichmäßig auf die Sollbruchstelle übertragen werden kann.

Der zweite Kabelabgang 22 weist einen zweiten Schraubkanal 25, der durch ein zweites Innengewinde 23 gebildet wird, auf. Auch zwischen dem zweiten Kabelabgang 22 und dem Steckverbindergehäuse 1 ist ein zweiter Verschluss 24 angeordnet, der einen hohlzylinderförmigen zweiten Flansch 27 mit einer in den zweiten Schraubkanal 25 gerichteten zweiten Ringfläche 26 aufweist. Sowohl der zweite Kabelabgang 22 als auch der zweite Verschluss 24 sind dabei axial in dieselbe Richtung ausgerichtet.

Fig. 2 zeigt das Steckverbindergehäuse 1 aus Fig. 1 in einer Seitenansicht. Dabei ist zu erkennen, dass sich der erste Kabelabgang 2 vertikal nach oben in Richtung der vertikalen Achse 51 erstreckt. Der zweite Kabelabgang 22 ist an der Seite des Steckverbindergehäuses 1 angeordnet. Dabei ist der zweite Kabelabgang 22 zu der horizontalen Achse 51 geneigt um einen Winkel α angeordnet. Der Winkel α bezeichnet dabei den Winkel zwischen der horizontalen Achse 51 des Steckverbindergehäuses 1 und der lokalen Achse 52 des zweiten Kabelabgangs 22. Das in den zweiten Kabelabgang 22 einzuführende Kabel wird dabei dennoch gerade in das Steckverbindergehäuse 1 eingeführt.

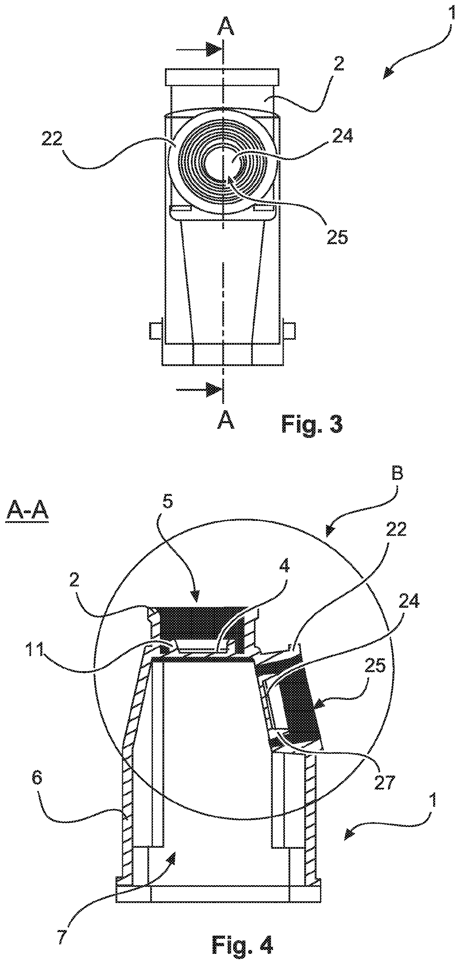

Fig. 3 zeigt das Steckverbindergehäuse 1 in einer weiteren Seitenansicht, in der zu erkennen ist, dass der zweite Kabelabgang 22 um einen Winkel geneigt zu der horizontalen Achse des Steckverbindergehäuses 1 angeordnet ist.

Fig. 4 zeigt eine Schnittansicht A-A des Steckverbindergehäuses 1 der Fig. 3. Hierin ist zu erkennen, dass sowohl der erste Verschluss 4 als auch der zweite Verschluss 24 einen ersten Flansch 11 bzw. einen zweiten Flansch 27 aufweist, der jeweils in den ersten 5 bzw. zweiten 25 Schraubkanal ragt. Der erste Flansch 11 bzw. zweite Flansch 27 weist jeweils kein Material im Inneren auf, so dass der jeweiligen Flansch 11 bzw. 27 eine hohlzylinderartige Form aufweist. Zudem ist zu erkennen; dass der erste Verschluss 4 bzw. der zweite Verschluss 24 zwischen dem ersten Kabelabgang 2 bzw. zweiten Kabelabgang 22 sowie dem Inneren 7 des Steckverbindergehäuses 1 angeordnet ist. Das Innere 7 des Steckverbindergehäuses 1 wird durch einen Hohlraum, der durch die Steckverbindergehäusewand 6 begrenzt ist, gebildet. In dem Inneren 7 des Steckverbindergehäuses 1 werden die durch den ersten Kabelabgang 2 und den zweiten Kabelabgang 22 eingeführten Kabel aufgenommen.

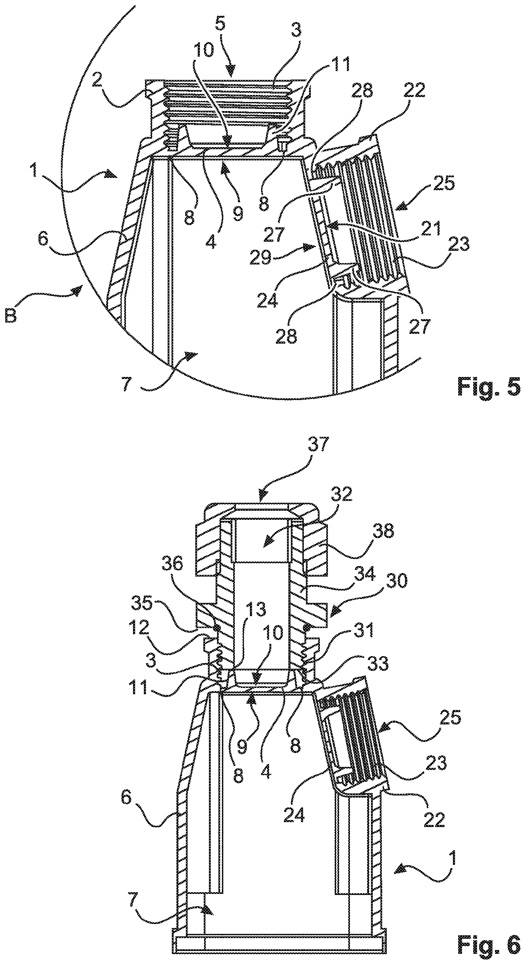

In Fig. 5 ist ein vergrößerter Ausschnitt B der Fig. 4 zu erkennen. Der Ausschnitt B zeigt den ersten Kabelabgang 2 sowie den zweiten Kabelabgang 22 sowie einen Teilbereich des Steckverbindergehäuses 1. Dabei ist deutlich zu erkennen, dass der erste und zweite Verschluss 4 bzw. 24 einen ersten bzw. zweiten Flansch 11 bzw. 27 aufweist, der in den ersten bzw. zweiten Schraubkanal 5 bzw. 25 hinein ragt. Der erste Verschluss 4 weist eine erste Innenseite 9 auf, die in das Steckverbindergehäuse 1 weist. Die erste Innenseite 9 bildet gemeinsam mit der Steckverbindergehäusewand 6 eine ebene, glatte Fläche. Auf der ersten Innenseite 9 ist somit kein Unterschied zwischen der Steckverbindergehäusewand 6 und dem ersten Verschluss 4 zu erkennen. Der zweite Verschluss 24 weist eine zweite Innenseite 29 auf, die wie die erste Innenseite 9 in das Innere 7 des Steckverbindergehäuses 1 weist. Auch die zweite Innenseite 29 bildet eine gemeinsame Fläche mit der Steckverbindergehäusewand 6. Der erste Verschluss 4 und der zweite Verschluss 24 weisen zudem eine erste Außenseite 10 bzw. eine zweite Außenseite 21 auf, welche der ersten Innenseite 9 bzw. zweiten Innenseite 29 gegenüber liegt. Der erste Flansch 11 bzw. der zweite Flansch 27 wird durch einen Teil der ersten Außenseite 10 bzw. der zweiten Außenseite 21 gebildet und ragt dabei in den ersten Schraubkanal 5 bzw. zweiten Schraubkanal 25.

Zudem ist in Figur 5 zu erkennen, dass das Steckverbindergehäuse 1 im Übergang zum ersten bzw. zweiten Verschluss 4 bzw. 24 eine erste bzw. zweite Sollbruchstelle 8 bzw. 28 aufweist. Dabei ist die erste bzw. zweite Sollbruchstelle 8 bzw. 28 als eine Kerbe ausgebildet, die zwischen dem ersten Flansch 11 bzw. dem zweiten Flansch 27 und der Steckverbindergehäusewand 6 angeordnet ist. Die jeweilige Kerbe weist eine geringere Wandstärke auf als die Wandstärke der übrigen Steckverbindergehäusewand 6. Somit wurde bewusst eine Schwächung des Materials an dieser Stelle herbeigeführt, um damit ein gezieltes Ablösen des ersten bzw. zweiten Verschlusses 4 bzw. 24 herbeizuführen.

Fig. 6 zeigt ein Steckverbindergehäuse, in das in den ersten Kabelabgang 2 eine Kabelverschraubung 30 zum Teil eingeschraubt ist. Der zweite Kabelabgang 22 weist keine Kabelverschraubung auf. Die Kabelverschraubung 30 in dem ersten Kabelabgang 2 ist bereits so weit eingeschraubt, als dass eine Anpressfläche 33 der Kabelverschraubung 30 bereits auf der ersten Ringfläche 13 des ersten Flansches 11 des ersten Verschlusses 4 aufliegt. Um die Kabelverschraubung 30 in den ersten Kabelabgang 2 einzuschrauben, weist die Kabelverschraubung 30 ein Kabelverschraubungsgewinde 31 auf, das in das erste Innengewinde 3 eingreift. Zur Aufnahme eines Kabels weist die Kabelverschraubung 30 einen Hohlraum 32 auf, in den durch eine Öffnung 37 ein Kabel eingeführt werden kann und mit einer Fixiervorrichtung 38 in der Kabelverschraubung 30 befestigt werden kann. Der Hohlraum 32 ist dabei durch die Außenwandung 34 begrenzt. Die Kabelverschraubung 30 weist eine Kabelverschraubungsauflagefläche 35 auf, die bei entsprechend eingeschraubter Kabelverschraubung 30 auf der Kabelabgangsauflagefläche 12 aufliegt. Um einen staub- und wasserdichten Verschluss zu erzielen, wenn die Kabelverschraubung 30 in dem ersten Kabelabgang 2 komplett eingeschraubt ist, ist zwischen der Kabelverschraubungsauflagefläche 35 und der Außenwandung 34 der Kabelverschraubung 30 ein Dichtungsring 36 angeordnet.

In Fig. 6 liegt die Kabelverschraubung 30 bereits mit der Anpressfläche 33 auf dem ersten Flansch 11 des ersten Verschlusses 4. Der erste Verschluss 4 ist dabei noch mit der Steckverbindergehäusewand 6 verbunden. In der dargestellten Position wird somit noch keine so große Kraft auf die erste Sollbruchstelle 8 ausgeübt, dass diese versagt. Der erste Verschluss 4 ist demnach noch fest mit der Steckverbindergehäusewand 6 verbunden.

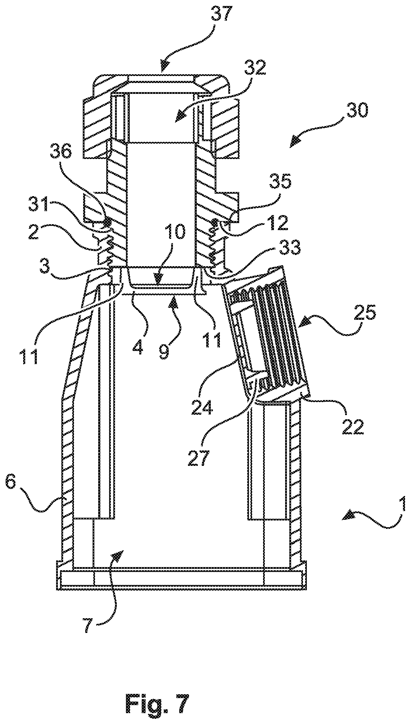

Fig. 7 zeigt die Kabelverschraubung 30 in einer zweiten Position. Dabei ist die Kabelverschraubung 30 so weit in den ersten Kabelabgang 2 eingeschraubt, dass die Kabelverschraubungsauflagefläche 35 auf der Kabelabgangsauflagefläche 12 aufliegt. Zur Abdichtung gegen Wasser und Staub weist die Kabelverschraubung 30 an dieser Stelle, also zwischen der Kabelverschraubungsauflagefläche 35 auf der Kabelabgangsauflagefläche 12 eine Dichtungsring 36 auf.

Die Krafteinwirkung der Kabelverschraubung 30 auf den ersten Verschluss 4 ist in dieser Position bereits so hoch, dass der erste Verschluss 4 aus dem Steckverbindergehäuse 1 losgelöst ist. Die erste Innenseite 9 des ersten Verschlusses 4 sowie die Steckverbindergehäusewand 6 bilden keine gemeinsame Fläche mehr. Das Herausbrechen bzw. Loslösen des ersten Verschlusses 4 ist dabei an der in Figur 6 zu erkennenden ersten Sollbruchstelle 8 erfolgt. Die Kraft durch das Hineinschrauben der Kabelverschraubung wurde von der Anpressfläche 33 auf die erste Ringfläche 13 des ersten Flansches 4 gleichmäßig bis hin zur ersten Sollbruchstelle 8 (gemäß Figur 6) geleitet. Dadurch dass die erste Sollbruchstelle 8 als eine Kerbe ausgebildet ist, weist diese an dieser Stelle eine geringere Wandstärke auf als die übrige Steckverbindergehäusewand 6. Somit wurde durch das Einschrauben der Kabelverschraubung 20 gezielt eine Kraft auf die erste Sollbruchstelle 8 ausgeübt, die zum vorbestimmten Versagen der ersten Sollbruchstelle 8 geführt hat. Das Herauslösen bzw. Herausbrechen des ersten Verschlusses 4 ist somit werkzeuglos erfolgt.

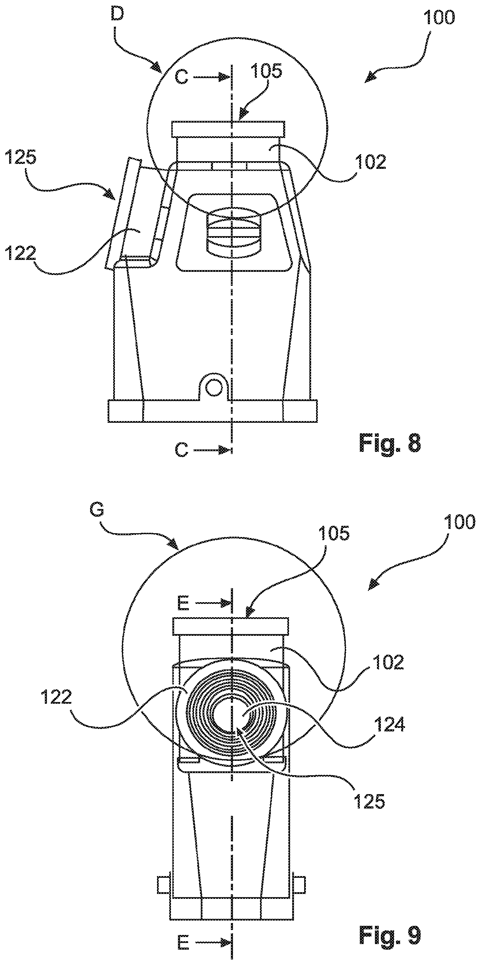

Die Figuren 8 und 9 zeigen das beanspruchte Ausführungsbeispiel eines Steckverbindergehäuses 100 jeweils in einer Seitenansicht, welches von außen genauso wie das Steckverbindergehäuse 1 der vorstehenden Figuren aufgebaut ist. Es weist dabei einen ersten Kabelabgang 102 und einen zweiten Kabelabgang 122 auf. Der erste Kabelabgang 102 weist einen ersten Schraubkanal 105 und der zweite Kabelabgang 122 einen zweiten Schraubkanal 125 auf. In Fig. 9 ist zusätzlich ein zweiter Verschluss 124 zu erkennen.

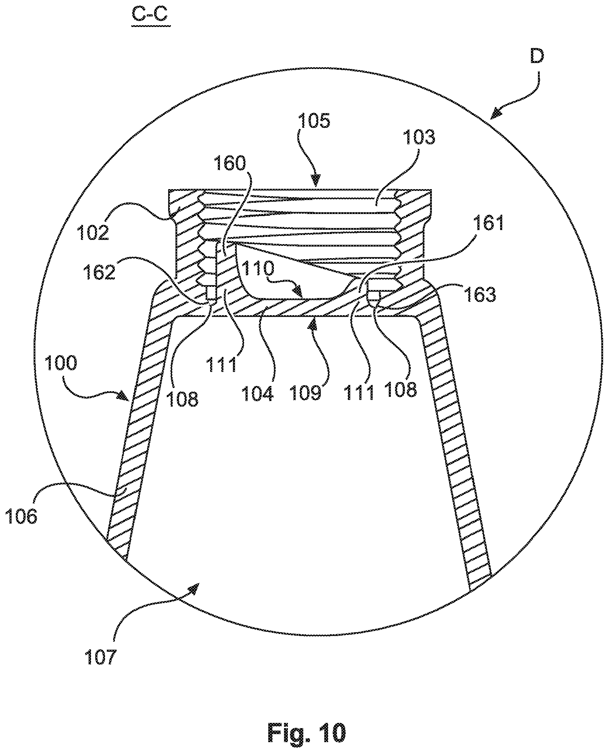

Fig. 10 zeigt einen vergrößerten Ausschnitt D des Schnittes C-C der Fig. 8. Darin ist der erste Kabelabgang 102 des Steckverbindergehäuses 100 mit einem ersten Innengewinde 103 als Ausführungsbeispiel eines Gewindes zu erkennen. Das erste Innengewinde 103 bildet einen ersten Schraubkanal 105. In den Schraubkanal 105 ragt eine erste Seite 160 und eine zweite Seite 161, die der ersten Seite 160 gegenüber liegt, eines ersten Flansches 111, der Teil eines ersten Verschlusses 104 ist. Der erste Verschluss 104 weist eine erste Innenseite 109 auf, die in das Innere 107 des Steckverbindergehäuses 100 gerichtet ist. Das Innere 107 des Steckverbindergehäuses 100 wird dabei durch die Steckverbindergehäusewand106 gebildet. Weiterhin weist der erste Verschluss 104 eine erst Außenseite 110 auf, die gegenüber der ersten Innenseite 109 angeordnet ist. Aus der ersten Außenseite 110 erstreckt sich in Richtung des ersten Schraubkanals 105 der erste Flansch 111. Die erste Seite 160 des ersten Flansches 111 ragt dabei weiter in den ersten Schraubkanal 105 als die zweite Seite 161 des ersten Flansches 111. Die erste Seite 160 weist also eine größere Höhe auf als die zweite Seite 161.

Der erste Verschluss weist im Übergang zur Steckverbindergehäusewand 106 eine erste Sollbruchstelle 108 auf, die um den ersten Verschluss 104 in Etwa in seiner Form um ihn herum angeordnet ist. Durch die erste Sollbruchstelle 108 wird ein gezieltes Versagen an dieser Stelle erreicht.

Vorteilhaft bei dieser Ausführungsform ist, dass eine geringere Kraft als bei einem in gleicher Höhe ausgebildeten Flansch aufgebracht werden muss. Durch das Einschrauben bzw. Hineindrehen einer Kabelverschraubung in das erste Innengewinde 103 trifft die Kabelverschraubung als erstes auf die erste Seite 160 des ersten Flansches 111. Somit wird zuerst die Kraft an dieser Stelle übertragen. Die erste Sollbruchstelle 108 wird daher zuerst an der ersten Stelle 162 versagen, die in axialer Verlängerung zwischen der ersten Seite 160 des ersten Flansches 111 und dem Inneren 107 des Steckverbindergehäuses 100 angeordnet ist. Bei einem weiteren Hineindrehen der Kabelverschraubung bricht der erste Verschluss 104 nach und nach weiter aus der Steckverbindergehäusewand 106 heraus. Erreicht die Kabelverschraubung die zweite Seite 161, bricht der erste Verschluss 104 ebenfalls an der zweiten Stelle 163 heraus und somit vollständig aus der Steckverbindergehäusewand 106.

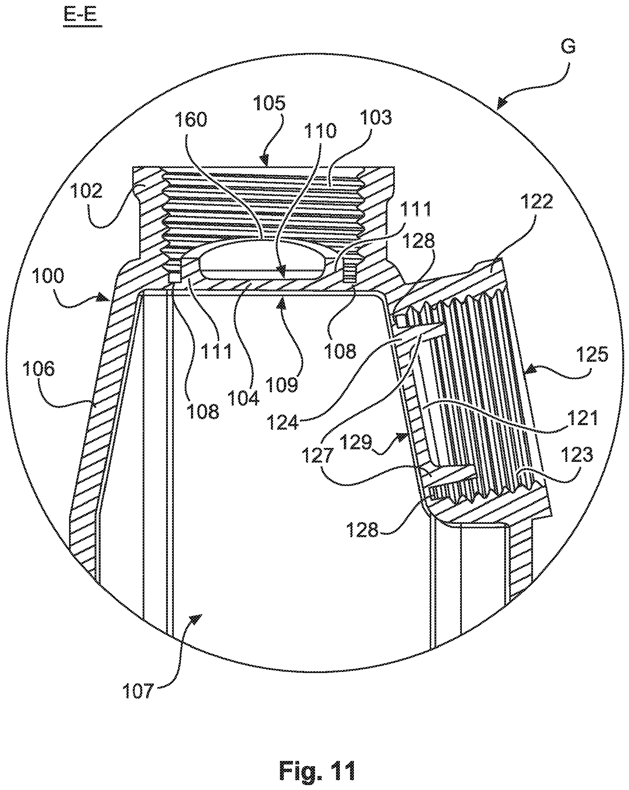

Fig. 11 zeigt einen vergrößerten Ausschnitt G des Schnittes E-E der Fig. 9. In Fig. 11 ist zusätzlich zur Fig. 10 noch der zweite Kabelabgang 122 in einer Schnittansicht zu erkennen. Im Gegensatz zum ersten Kanalabgang 102 weist der zweite Kanalabgang im Übergang zu dem Inneren 107 des Steckverbindergehäuses 100 einen zweiten Verschluss 124 auf, der einen zweiten Flansch 127 in einer gleichmäßigen Höhe aufweist, also an jeder Stelle in etwa gleich weit in den zweiten Schraubkanal 125 hineinragend. Zudem ist in Fig. 11 zusätzlich zu erkennen, dass der erste Flansch 111 von der ersten Seite 160 ausgehend gleichmäßig an Höhe abnimmt. Die erste Seite 160 ragt somit bezogen auf den gesamten ersten Flansch 111 am höchsten bzw. am weitesten in den Schraubkanal 105 hinein.

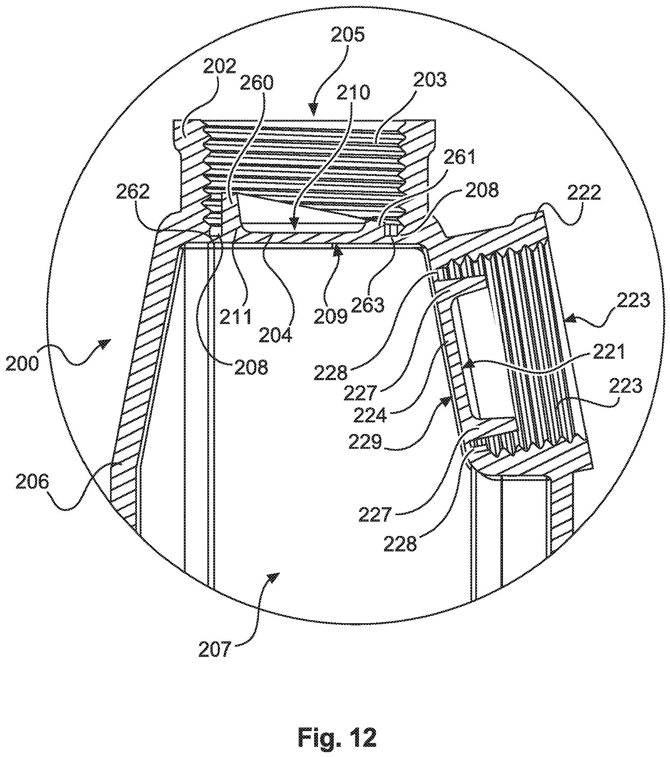

Fig. 12 zeigt ein Steckverbindergehäuse 200, welches einen ersten Kabelabgang 202 und einen zweiten Kabelabgang 222 aufweist. Im Unterschied zu dem Steckverbindergehäuse 100 der Fig. 11 weist der erste Verschluss 204 die erste Seite 260 und die zweite Seite 261 des ersten Flansches 211 an einer anderen Stelle auf. D.h., dass die erste Seite 260 an einer anderen Stelle als in Fig. 11 angeordnet ist. Der erste Flansch 211 ragt an der ersten Seite 260 am weitesten in den Schraubkanal 205, der durch das Innengewinde 203 gebildet wird, hinein. Der erste Verschluss 204 wird daher zuerst an der ersten Stelle 262 aus der Steckverbindergehäusewand 206 herausbrechen.

Im Übrigen weist das Steckverbindergehäuse 200 ebenfalls einen zweiten Kanalabgang 222 mit einem zweiten Innengewinde 223 auf, das einen zweiten Schraubkanal 225 bildet. Zudem befindet sich zwischen dem Inneren 207 und dem zweiten Kanalabgang 222 ein zweiter Verschluss 224, der eine zweite Innenseite 229 und eine zweite Außenseite 221 aufweist. Der zweite Verschluss 224 weist einen umlaufenden zweiten Flansch 227, der gleichmäßig in der Höhe ausgebildet ist. Der zweite Verschluss 224 wird sich beim Einschrauben einer Kabelverschraubung an der zweiten Sollbruchstelle 228 gleichmäßig von der Steckverbindergehäusewand 206 lösen.

## Patentansprüche

1. Steckverbindergehäuse ( 100, 200) zum Schutz eines Steckverbinders, umfassend:
- wenigstens einen voreingerichteten Kabelabgang (102, 122, 202, 222) zum Anschließen einer Kabelverschraubung (30) und
- wenigstens einen Verschluss (104, 124, 204, 224) zum Verschließen des wenigstens einen Kabelabgangs (102, 122, 202, 222),
wobei der wenigstens eine Kabelabgang (102, 122, 202, 222) ein Innengewinde (103, 123, 203, 223) aufweist, durch welches ein Schraubkanal (105, 125, 205, 225) gebildet wird, und
das Steckverbindergehäuse ( 100, 200) im Übergang zum Verschluss (104, 124, 204, 224) eine Sollbruchstelle (108, 128, 208, 228) aufweist, wobei der Verschluss (104, 124, 204, 224) integraler Bestandteil des Steckverbindergehäuses ( 100, 200) ist und/oder an das Steckverbindergehäuse ( 100, 200) angeformt ist, wobei der Verschluss (104, 124, 204, 224) durch Einschrauben der Kabelverschraubung (30) in den Schraubkanal (105, 125, 205, 225) des Steckverbindergehäuses (100, 200) herausbrechbar ist, wobei der Verschluss (104, 124, 204, 224) eine Innenseite (109, 209) aufweist, welche in das Innere (107, 207) des Steckverbindergehäuses ( 100, 200) weist und eine Außenseite (110, 210) aufweist, welche der Innenseite (109, 209) gegenüber liegt und der Verschluss (104, 124, 204, 224) mit einem Teil seiner Außenseite (110, 210) in den Schraubkanal (105, 125, 205, 225) ragt, wobei das Steckverbindergehäuse wenigstens zwei Kabelabgänge (102, 122, 202, 222) aufweist, wobei wenigstens einer dieser Kabelabgänge (102,122, 202, 222) in Richtung einer vertikalen Achse des Steckverbindergehäuses angeordnet ist
**dadurch gekennzeichnet, dass** der Teil an der Außenseite (110, 210) des Verschlusses (104, 124, 204, 224) einen Flansch (111,211) bildet, welcher in den Schraubkanal (105, 125, 205, 225) ragt, ider Kabelabgang (102, 122, 202, 222) durch den Verschluss (104, 124, 204, 224) staub- und wasserdicht verschlossen ist,
zumindest ein anderer der Kabelabgänge (122, 222) zu einer horizontalen Achse des Steckverbindergehäuses (1, 100, 200) um einen vorbestimmten Winkel geneigt angeordnet ist, wobei der Flansch (111, 211) hohlzylinderartig, auf dem gesamten Umfang des Verschlusses (104, 124, 204, 224) angeordnet ausgeführt ist und eine erste Seite (160, 260) und eine zweite, der ersten gegenüberliegenden Seite (161, 261) aufweist, wobei der Flansch (111, 211) auf der ersten Seite (160, 260) weiter in den Schraubkanal (105, 205) ragt als auf der zweiten Seite (161, 261), sodass der Flansch (111,211) auf der ersten Seite (160, 260) eine andere Höhe aufweist als auf der zweiten Seite (161, 261), wobei diese Höhe gleichmäßig von der ersten Seite (160, 260) zur zweiten Seite (161, 261) hin abnimmt.

2. Steckverbindergehäuse (100, 200) nach Anspruch 1,
**dadurch gekennzeichnet, dass** die Sollbruchstelle (108, 128, 208, 228) im Wesentlichen kreisförmig ausgebildet ist und in etwa in axialer Verlängerung des Innengewindes (103, 123, 203, 223) der Kabelabgänge (102, 122, 202, 222) liegt.

3. Steckverbindergehäuse (100, 200) nach einem der vorhergehenden Ansprüche,
**dadurch gekennzeichnet, dass** der Verschluss (104, 124, 204, 224) durch das Hineindrehen der Kabelverschraubung (30) ohne zusätzliches Werkzeug herausbrechbar ist.

4. Steckverbindergehäuse (100, 200) nach einem der vorhergehenden Ansprüche,
**dadurch gekennzeichnet, dass** das Steckverbindergehäuse (100, 200) an der Sollbruchstelle (108, 128, 208, 228) eine Dicke aufweist, die in etwa 3% bis 25% der Wandstärke des Steckverbindergehäuses (100, 200) entspricht.

5. Steckverbindergehäuse ( 100, 200) nach einem der vorhergehenden Ansprüche,
**dadurch gekennzeichnet, dass** nach dem Herausbrechen des Verschlusses (104, 124, 204, 224) die Sollbruchstelle (108, 128, 208, 228) durch die Kabelverschraubung (30) abgedeckt ist.

6. Steckverbindergehäuse ( 100, 200) nach einem der vorhergehenden Ansprüche,
**dadurch gekennzeichnet, dass** der Flansch (111, 211) einen radial ausgebildeten Rand aufweist und/oder mit seinem äußeren Rand ca. 20% bis 50%, vorzugsweise 30% bis 40%, des Schraubkanals (105, 125, 205, 225) durchdringt.

7. Verfahren zum Öffnen eines Kabelabgangs (102, 122, 202, 222) eines Steckverbindergehäuses (100, 200) nach einem der vorhergehenden Ansprüche,
**dadurch gekennzeichnet, dass** mittels eines Kabelverschraubungsgewindes (31) einer Kabelverschraubung (30) in das Innengewinde (103, 123, 203, 223) des Kabelabgangs (102, 122, 202, 222) die Kabelverschraubung (30) gegen den Flansch (111, 211) des Verschlusses (104, 124, 204, 224) drückt und den Verschluss (104, 124, 204, 224) an einer Sollbruchstelle (108, 128, 208, 228) vom Steckverbindergehäuse (100, 200) löst und den Kabelabgang (102, 122, 202, 222) öffnet.

8. Verfahren nach Anspruch 7,
**dadurch gekennzeichnet, dass** der Kabelabgang (102, 122, 202, 222) ohne zusätzliches Werkzeug zu öffnen ist.

9. Verfahren zur Herstellung eines Steckverbindergehäuses (100, 200) nach einem der vorhergehenden Ansprüche,
**dadurch gekennzeichnet, dass** nach der Herstellung der wenigstens eine Kabelabgang (102, 122, 202, 222) durch den Verschluss (104, 124, 204, 224) staub- und wasserdicht verschlossen ist.

## Claims

1. Plug connector housing (100, 200) for protecting a plug connector, comprising:
- at least one pre-installed cable outlet (102, 122, 202, 222) for connecting a cable gland (30), and
- at least one closure (104, 124, 204, 224) for closing the at least one cable outlet (102, 122, 202, 222),
the at least one cable outlet (102, 122, 202, 222) having an internal thread (103, 123, 203, 223), by way of which a screw channel (105, 125, 205, 225) is formed, and the plug connector housing (100, 200) having a predetermined break point (108, 128, 208, 228) at the transition to the closure (104, 124, 204, 224), the closure (104, 124, 204, 224) being an integral constituent part of the plug connector housing (100, 200) and/or being moulded onto the plug connector housing (100, 200), it being possible for the closure (104, 124, 204, 224) to be broken out by way of screwing of the cable gland (30) into the screw channel (105, 125, 205, 225) of the plug connector housing (100, 200), the closure (104, 124, 204, 224) having an inner side (109, 209) which points into the interior (107, 207) of the plug connector housing (100, 200), and having an outer side (110, 210) which lies opposite the inner side (109, 209), and the closure (104, 124, 204, 224) protruding with a part of its outer side (110, 210) into the screw channel (105, 125, 205, 225), the plug connector housing having at least two cable outlets (102, 122, 202, 222), at least one of these cable outlets (102, 122, 202, 222) being arranged in the direction of a vertical axis of the plug connector housing,
**characterized in that** the part on the outer side (110, 210) of the closure (104, 124, 204, 224) forms a flange (111, 211) which protrudes into the screw channel (105, 125, 205, 225),
the cable outlet (102, 122, 202, 222) is closed in a dirt-tight and water-tight manner by way of the closure (104, 124, 204, 224),
at least another one of the cable outlets (122, 222) is arranged inclined by a predefined angle with respect to a horizontal axis of the plug connector housing (1, 100, 200), the flange (111, 211) being of hollow-cylindrical configuration arranged on the entire circumference of the closure (104, 124, 204, 224), and having a first side (160, 260) and a second side (161, 261) which lies opposite the first side, the flange (111, 211) protruding further into the screw channel (105, 205) on the first side (160, 260) than on the second side (161, 261), with the result that the flange (111, .211) has a different height on the first side (160, 260) to that on the second side (161, 261), this height decreasing uniformly from the first side (160, 260) towards the second side (161, 261) .

2. Plug connector housing (100, 200) according to Claim 1, **characterized in that** the predetermined break point (108, 128, 208, 228) is of substantially circular configuration and lies approximately in an axial extension of the internal thread (103, 123, 203, 223) of the cable outlets (102, 122, 202, 222).

3. Plug connector housing (100, 200) according to either of the preceding claims, **characterized in that** the closure (104, 124, 204, 224) can be broken out without an additional tool by way of the cable gland (30) being screwed in.

4. Plug connector housing (100, 200) according to one of the preceding claims, **characterized in that** the plug connector housing (100, 200) has, at the predetermined break point (108, 128, 208, 228), a thickness which corresponds to approximately from 3% to 25% of the wall thickness of the plug connector housing (100, 200).

5. Plug connector housing (100, 200) according to one of the preceding claims, **characterized in that**, after the closure (104, 124, 204, 224) is broken out, the predetermined break point (108, 128, 208, 228) is covered by way of the cable gland (30).

6. Plug connector housing (100, 200) according to one of the preceding claims, **characterized in that** the flange (111, 211) has a radially configured edge and/or its outer edge penetrates approximately from 20% to 50%, preferably by from 30% to 40%, of the screw channel (105, 125, 205, 225).

7. Method for opening a cable outlet (102, 122, 202, 222) of a plug connector housing (100, 200) according to one of the preceding claims, **characterized in that**, by means of a cable gland thread (31) of a cable gland (30), the cable gland (30) presses into the internal thread (103, 123, 203, 22.3) of the cable outlet (102, 122, 202, 222) against the flange (111, 211) of the closure (104, 124, 204, 224), and detaches the closure (104, 124, 204, 224) at a predetermined break point (108, 128, 208, 228) from the plug connector (100, 200) and opens the cable outlet (102, 122, 202, 222).

8. Method according to Claim 7, **characterized in that** the cable outlet (102, 122, 202, 222) can be opened without an additional tool.

9. Method for producing a plug connector (100, 200) according to one of the preceding claims, **characterized in that**, after production, the at least one cable outlet (102, 122, 202, 222) is closed in a dirt-tight and water-tight manner by way of the closure (104, 124, 204, 224).

## Revendications

1. Boîtier de connecteur enfichable (100, 200) destiné à protéger un connecteur enfichable, ledit boîtier comprenant :
- au moins une sortie de câble pré-aménagé (102, 122, 202, 222) destinée au raccordement d'un passe-câble à vis (30) et
- au moins une fermeture (104, 124, 204, 224) destinée à fermer l'au moins une sortie de câble (102, 122, 202, 222),
l'au moins une sortie de câble (102, 122, 202, 222) comportant un filetage intérieur (103, 123, 203, 223) à travers lequel est ménagé un canal fileté (105, 125, 205, 225), et le boîtier de connecteur enfichable (100, 200) comportant un point de rupture prédéterminé (108, 128, 208, 228) au niveau de la transition vers la fermeture (104, 124, 204, 224), la fermeture (104, 124, 204, 224) faisant partie intégrante du boîtier de connecteur enfichable (100, 200) et/ou étant moulée sur le boîtier de connecteur enfichable (100, 200), la fermeture (104, 124, 204, 224) pouvant être rompue par vissage du passe-câble fileté (30) dans le canal fileté (105, 125, 205, 225) du boîtier de connecteur enfichable (100, 200), la fermeture (104, 124, 204, 224) comportant un côté intérieur (109, 209) qui est dirigé vers l'intérieur (107, 207) du boîtier de connecteur enfichable (100, 200) et un côté extérieur (110, 210) qui est opposé au côté intérieur (109, 209) et la fermeture (104, 124, 204, 224) faisant saillie avec une partie de son côté extérieur (110, 210) dans le canal fileté (105, 125, 205, 225), le boîtier de connecteur enfichable comportant au moins deux sorties de câble (102, 122, 202, 222), au moins une de ces sorties de câble (102, 122, 202, 222) étant disposée en direction d'un axe vertical du boîtier de connecteur enfichable,
**caractérisé en ce que**
la partie située du côté extérieur (110, 210) de la. fermeture (104, 124, 204, 224) comporte une bride (111, 211) qui fait saillie dans le canal fileté (105, 125, 205, 225),
la sortie de câble (102, 122, 202, 222) est fermée de manière étanche à la poussière et à l'eau par la fermeture (104, 124, 204, 224),
au moins une autre des sorties de câble (122, 222) est disposée de manière inclinée d'un angle prédéterminé par rapport à un axe horizontal du boîtier de connecteur enfichable (1, 100, 200), la bride (111, 211) étant réalisée sous la forme d'un cylindre creux qui est disposé sur toute la périphérie de la fermeture (104, 124, 204, 224) et comportant un premier côté (160, 260) et un deuxième côté (161, 261) opposé au premier, la bride (111, 211) faisant saillie davantage dans le canal fileté (105, 205) sur le premier côté (160, 260) que sur le deuxième côté (161, 261) de sorte que la bride (111, 211) ait une hauteur différente sur le premier côté (160, 260) que sur le deuxième côté (161, 261), cette hauteur diminuant uniformément du premier côté (160, 260) vers le deuxième côté (161, 261) .

2. Boîtier de connecteur enfichable (100, 200) selon la revendication 1, **caractérisé en ce que** le point de rupture prédéterminé (108, 128, 208, 228) est sensiblement circulaire et est situé approximativement dans le prolongement axial du filetage intérieur (103, 123, 203, 223) des sorties de câble (102, 122, 202, 222).

3. Boîtier de connecteur enfichable (100, 200) selon l'une des revendications précédentes, **caractérisé en ce que** la fermeture (104, 124, 204, 224) peut être rompue par vissage du passe-câble fileté (30) sans outil supplémentaire.

4. Boîtier de connecteur enfichable (100, 200) selon l'une des revendications précédentes, **caractérisé en ce que** le boîtier de connecteur enfichable (100, 200) a au point de rupture prédéterminé (108, 128, 208, 228) une épaisseur qui correspond environ 3 % à 25 % à l'épaisseur de paroi du boîtier de connecteur enfichable (100, 200).

5. Boîtier de connecteur enfichable (100, 200) selon l'une des revendications précédentes, **caractérisé en ce qu'**après rupture de la fermeture (104, 124, 204, 224), le point de rupture prédéterminé (108, 128, 208, 228) est recouvert par le passe-câble fileté (30).

6. Boîtier de connecteur enfichable (100, 200) selon l'une des revendications précédentes, **caractérisé en ce que** la bride (111, 211) comporte un bord formé radialement et/ou pénètre avec son bord extérieur sur environ 20 % à 50 %, de préférence 30 % à 40 % %, du canal fileté (105, 125, 205, 225).

7. Procédé d'ouverture d'une sortie de câble (102, 122, 202, 222) d'un boîtier de connecteur enfichable (100, 200) selon l'une des revendications précédentes, **caractérisé en ce que** l'engagement du filetage (31) du passe-câble fileté (30) dans le filetage intérieur (103, 123, 203, 223) de la sortie de câble (102, 122, 202, 222) permet de presser le passe-câble fileté (30) contre la bride (111, 211) de la fermeture (104, 124, 204, 224) et d'ouvrir la fermeture (104, 124, 204, 224) à un point de rupture prédéterminé (108, 128, 208, 228) du boîtier de connecteur enfichable (100, 200) et la sortie de câble (102, 122, 202, 222).

8. Procédé selon la revendication 7, **caractérisé en ce que** la sortie de câble (102, 122, 202, 222) peut être ouverte sans outil supplémentaire.

9. Procédé de réalisation d'un boîtier de connecteur enfichable (100, 200) selon l'une des revendications précédentes, **caractérisé en ce que**, après avoir réalisé l'au moins une sortie de câble (102, 122, 202, 222) à travers la fermeture (104, 124, 204, 224), la fermeture est étanche à la poussière et à l'eau.
